# EUROPEAN PATENT APPLICATION

(11) **EP 4 585 417 A2**
(43) Date of publication of application: **16.07.2025**
(21) Application number: 24219881.0
(22) Date of filing: 13.12.2024
(51) Int. Cl.: B32B 17/10, B60J 1/00, B60R 1/00, G02F 1/1335, G06F 21/84

(54) **OPTICAL LAMINATE AND SUNROOF INCLUDING THE SAME**

(30) Priority: 21.12.2023 KR 20230188590
(71) Applicant: Dongwoo Fine-Chem Co., Ltd., Iksan-si, Jeollabuk-do 54631 (KR)
(72) Inventor: LIM, Geo-San, 54631 Jeollabuk-do (KR); KIM, Dong-Hwi, 54631 Jeollabuk-do (KR)
(74) Representative: Betten & Resch

(57) **Abstract**

Disclosed is a transmittance variable optical laminate including: a light control laminate including an electric field-driven liquid crystal between polarizing plates; and a louver film disposed on at least a portion of the indoor-side surface of the light control laminate, wherein the louver film includes light-blocking patterns, wherein the light-blocking patterns are inclined at a predetermined angle with respect to an adherend surface when viewed in a vertical cross-section. Also, disclosed is a sunroof including the transmittance variable optical laminate.

## Description

### BACKGROUND

### 1. Technical Field

The present disclosure relates to an optical laminate and a sunroof including the same.

### 2. Related Art

In general, there are many cases in which an external light blocking coating is applied to a window of a means of transportation such as a vehicle. However, the transmittance of a conventional window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, a transmittance variable optical laminate capable of changing the transmittance of light when a voltage is applied has been developed.

Meanwhile, in a social atmosphere where privacy is valued, there have been attempts to provide anti-reflective function to windows. In particular, in the case of a vehicle sunroof, there is a problem in that when driving at night, the reflection (reflected image) of the front seat panel on the sunroof causes glare to the rear seat passenger. Accordingly, where a transmittance variable optical laminate is applied to a sunroof, etc., it is necessary to improve the anti-reflection function for night driving, etc. in addition to improving the transmittance adjustment function.

Accordingly, technology for attaching a coating having an anti-reflection function onto one or both surfaces of an optical laminate has been developed. For example, Korean Patent Application Publication No. 1999-0028992 discloses a window glass having an anti-reflection coating, and more specifically, discloses a window glass including two or more layers of materials having high and low refractive indices.

However, where multi-layer coating layers are introduced to provide an anti-reflection function as described above, there is a disadvantage in that the thickness of the optical laminate increases, which reduces the transmittance adjustment performance, or the manufacturing process becomes complicated. Furthermore, where such a coating is applied to a laminate that essentially includes a liquid crystal layer or a polarizing plate and includes an electric field-driven liquid crystal between the polarizing plates, the thickness of the entire laminate becomes excessively thick, making the laminate unsuitable for application to vehicles or buildings.

Accordingly, there is a need to develop an optical laminate which has an anti-reflection function without reducing the transmittance of external light, and also has a small thickness and favorable flexural properties, and a sunroof including the same.

### [Prior Art Documents]

### [Patent Documents]

(Patent Document 1) Korean Patent Application Publication No. 1999-0028992

### SUMMARY

An object of the present disclosure is to provide an optical laminate which has an anti-reflection function without reducing the transmittance of external light, and also has a small thickness and favorable flexural properties, and a sunroof including the same.

To achieve the above object, the present disclosure provides a transmittance variable optical laminate including: a light control laminate including an electric field-driven liquid crystal between polarizing plates; and a louver film disposed on at least a portion of the indoor-side surface of the light control laminate, wherein the louver film includes light-blocking patterns, wherein the light-blocking patterns are inclined at a predetermined angle with respect to an adherend surface when viewed in a vertical cross-section.

In one embodiment of the present disclosure, a length (a) obtained by projecting an inclined surface of the light-blocking pattern onto the adherend surface when viewed in the vertical cross-section may be 5 to 50% of a light-blocking portion (ω1).

In one embodiment of the present disclosure, the transmittance variable optical laminate may have a maximum viewing angle ranging from 40° to 75° for reflected image, wherein the viewing angle (θ1) for reflected image is the angle of the reflected light with respect to a straight line perpendicular to the adherend surface toward the indoor side when viewed in the vertical cross-section of the transmittance variable optical laminate.

In one embodiment of the present disclosure, the transmittance variable optical laminate may have a maximum viewing angle ranging from 60° to 85° for external light transmitted from the outside, wherein the viewing angle (θ2) for external light is the angle of external light with respect to a straight line perpendicular to the adherend surface toward the indoor side when viewed in the vertical cross-section of the transmittance variable optical laminate.

In another embodiment of the present disclosure, the light-blocking pattern may be composed of two or more unit patterns laminated to be at least partially misaligned.

In another embodiment of the present disclosure, the louver film may include: an inter-pattern spacing where the light-blocking pattern is not formed; and a light-blocking portion where the light-blocking pattern is formed, wherein, assuming that the height of the light-blocking pattern is h, and the light-blocking portion is ω1, h/ω1 may be 0.5 to 4.0, and assuming that the inter-pattern spacing is ω2 and a vertical light-transmitting portion is ω3, the aperture ratio p defined as ω3/(ω2+ω1)×100(%) with respect to the direction perpendicular to the plane may be 70% or more.

In another embodiment of the present disclosure, the light-blocking patterns may protrude toward the indoor side.

In another embodiment of the present disclosure, the light control laminate may include: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one of the first transparent conductive layer and the second transparent conductive layer may be formed in direct contact with any one of the first polarizing plate and the second polarizing plate.

In another embodiment of the present disclosure, at least one of the first transparent conductive layer and the second transparent conductive layer may include at least one selected from the group consisting of a transparent conductive oxide, a metal, a carbonaceous material, a conductive polymer, a conductive ink, and nanowires.

In another embodiment of the present disclosure, at least one of the first polarizing plate and the second polarizing plate may include at least one functional layer selected from the group consisting of a protective layer, a retardation matching layer, and a refractive index matching layer.

In another embodiment of the present disclosure, at least one of the first polarizing plate and the second polarizing plate may have a thickness of 30 µm to 200 µm.

In another embodiment of the present disclosure, the liquid crystal layer may include at least one spacer selected from the group consisting of a ball spacer and a column spacer.

In another embodiment of the present disclosure, the light control laminate may further include an alignment film on both surfaces of the liquid crystal layer.

The present disclosure also provides a sunroof including the transmittance variable optical laminate.

According to the optical laminate according to an embodiment of the present disclosure, the louver film, which includes the light-blocking patterns protruding toward the indoor side, exhibits an excellent anti-reflection function without lowering the transmittance of external light.

According to the optical laminate according to one embodiment of the present disclosure, the transparent conductive layer may be formed directly on and in direct contact with the polarizing plate rather than being formed on a separate substrate and attached to the polarizing plate, thereby providing an optical laminate having a small overall thickness and favorable flexural properties.

In addition, as the overall thickness of the optical laminate is reduced as described above, when the louver film having a unique structure according to the present disclosure is applied, it has the advantage of maximizing not only the anti-reflection function but also the transmittance adjustment function.

Furthermore, when the transmittance variable optical laminate of the present disclosure is applied as a sunroof, it is possible to reduce a phenomenon in which the reflection (reflected image) of the front seat panel on the sunroof causes glare to a rear seat passenger when driving at night.

### BRIEF DESCRIPTION OF THE DRAWINGS

FIGS. 1a and 1b are views showing the structure of a transmittance variable optical laminate according to one embodiment of the present disclosure (inclined light-blocking pattern not shown).
FIGS. 2a and 2b are views showing the structure of a louver film according to an embodiment of the present disclosure.
FIG. 3 shows the angle of a light-blocking pattern of the present disclosure with respect to an adherend surface when the light-blocking pattern is single-layered.
FIG. 4 shows unit patterns of a light-blocking pattern of the present disclosure when the light-blocking pattern is multi-layered.
FIGS. 5a to 5c show the substantial inclination of unit patterns of a light-blocking pattern of the present disclosure when the light-blocking pattern is multi-layered.
FIG. 6 shows the movement of reflected light on a transmission variable optical laminate according to an embodiment of the present disclosure.
FIG. 7 shows the movement of external light through a transmission variable optical laminate according to an embodiment of the present disclosure.
FIG. 8 shows reflected light when the viewing angle for reflected image is maximum in a transmittance variable optical laminate in which a light-blocking pattern according to an embodiment of the present disclosure is single- or multi-layered and substantially inclined.
FIG. 9 shows the field of view of a seated passenger, determined according to the maximum viewing angle range (θ1) for reflected image and the maximum viewing angle range (θ2) for external light in the transmittance variable optical laminate.
FIGS. 10a to 10e are views showing the laminated structures of polarizing plates according to one or more embodiments of the present disclosure.

### DETAILED DESCRIPTION

The present disclosure relates to a transmittance variable optical laminate which not only has a small thickness and favorable flexural properties, but also may effectively adjust the transmittance of external light while having an anti-reflection function, and thus dramatically reduces glare caused to a rear seat passenger by the reflection (reflected image) of a front seat panel on a sunroof when driving at night, and to a smart window and sunroof including the same.

More specifically, the present disclosure is mainly characterized in that the range of the viewing angle (θ1) for reflected image may be adjusted by including light-blocking patterns disposed to protrude toward the indoor side.

The transmittance variable optical laminate of the present disclosure is particularly suitable for technical fields where the transmittance of light can be changed in response to the application of voltage, and may be used, for example, for a smart window or the like.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of means of transportations such as vehicles, buses, airplanes, ships, or trains or windows of means of transportation, such as a sunroof.

The transmittance variable optical laminate of the present disclosure may also be used for the smart window in the various technical fields mentioned above, but since the conductive layer is directly formed in the polarizing plate, there is no need to include a separate substrate for forming the conductive layer and the thickness thereof is small and the transmittance variable optical laminate is favorable in terms of flexural properties, and thus the optical laminate of the present disclosure may particularly suitable for use for a smart window for a vehicle or a building. According to one or more embodiments, the smart window to which the transmittance variable optical laminate of the present disclosure is applied may be used for front windows, rear windows, side windows, and sunroof windows of transportation means such as vehicles, or windows and doors for buildings. Furthermore, the smart window may be used not only for blocking external light, but also for partitioning internal spaces of automobiles or buildings, such as interior partitions, or for privacy protection, and may also be used in wearable devices such as helmets, glasses, or watches. More specifically, the transmittance variable optical laminate of the present disclosure is characterized in that it functions to maximize privacy protection by not only controlling transmitted external light, but also blocking light reflected from a neighboring location. In particular, the transmittance variable optical laminate of the present disclosure is not only small in thickness and favorable in flexural properties, but also has an anti-reflection function without reducing the transmittance of external light, and thus where it is applied to a sunroof of a vehicle, it has the advantage of dramatically reducing glare caused to a rear seat passenger by the reflection (reflected image) of the front seat panel on the sunroof when driving at night.

Hereinafter, embodiments of the present disclosure will be described in more detail with reference to the accompanying drawings. However, the following drawings attached to this specification illustrate preferred embodiments of the present disclosure, and serve to aid in further understanding of the technical idea of the present disclosure together with the contents of the present disclosure described above. Therefore, the present disclosure should not be interpreted as being limited to matters described in the drawings.

Terms used in this specification are for purpose of describing embodiments and are not intended to limit the present disclosure. In this specification, singular forms also include plural forms unless the context clearly indicates otherwise. For example, the term "polarizing plate" as used herein may mean at least one polarizing plate among a first polarizing plate and a second polarizing plate, and the term "transparent conductive layer" may mean at least one transparent conductive layer among a first transparent conductive layer and a second transparent conductive layer.

As used herein, terms such as "comprise", "comprising", "include", and "including" are intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the component in use or operation, in addition to the orientation depicted in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "planar direction" may be interpreted as a direction orthogonal to the polarizing plate and/or the transparent conductive layer, that is, the direction of the user's view. In addition, as used herein, the term "vertical direction" may refer to a direction orthogonal to the thickness direction of the polarizing plate and/or the transparent conductive layer, that is, a direction orthogonal to the "planar direction" which is the direction of the user's view. In addition, the term "vertical cross-section" may mean a cross-section obtained when the transmittance variable optical laminate of the present disclosure is cut in a vertical direction.

As used herein, the "indoor side" may mean the side viewed by a user. For example, where the transmittance variable optical laminate is applied to a vehicle, the term "indoor side" mean the inside of the vehicle, which is the side viewed by the passenger within the vehicle, and where the transmittance variable optical laminate is applied to a building, the term "indoor side" may mean the indoor side of the building, which is the side viewed by a user within the building, without being limited thereto. The term "outdoor side" or "outside" is a term opposed to the term "indoor side" and may mean the side opposite to the side viewed by a user based on the transmittance variable optical laminate.

### < Transmittance Variable Optical Laminate>

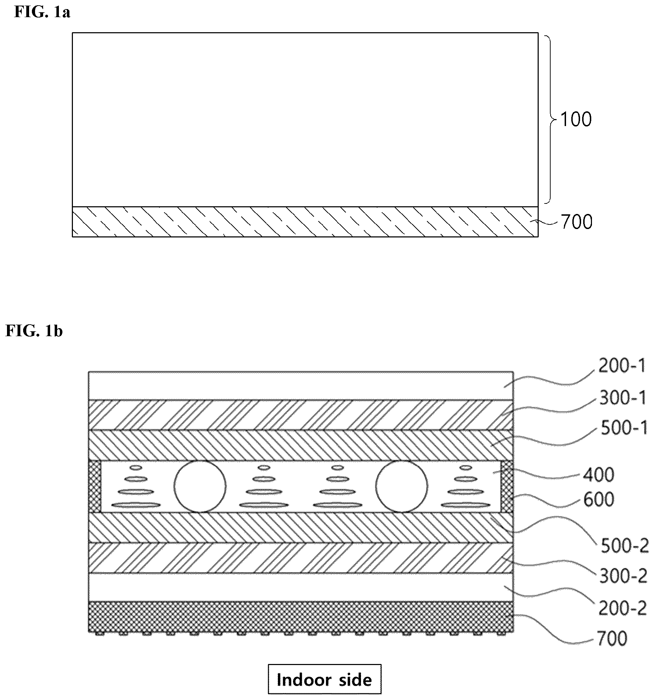

FIGS. 1a and 1b are views showing the structure of a transmittance variable optical laminate according to one embodiment of the present disclosure (inclined light-blocking pattern not shown).

The transmittance variable optical laminate of the present disclosure may include: a light control laminate 100 including an electric field-driven liquid crystal between polarizing plates; and a louver film 700 disposed on at least a portion of the indoor-side surface of the light control laminate, in particular wherein the louver film 700 includes light-blocking patterns 720, wherein the light-blocking patterns 720 are inclined at a predetermined angle with respect to an adherend surface when viewed in a vertical cross-section.

As used herein, the term "adherend surface" means a layer to which the light-blocking patterns 720 of the louver film 700 are attached. For example, where the light-blocking patterns 720 of the louver film 700 of the present disclosure are formed directly on the light control laminate 100 without an additional substrate or film, the adherend surface may be one surface of the light control laminate 100, preferably an indoor-side surface of the light control laminate 100, and it may be, for example, a polarizing plate 200, a polarizer 210, a protective layer 220, a laminated retardation matching layer 230, or a refractive index matching layer 240. In another example of the present disclosure, where the light-blocking patterns 720 of the louver film 700 of the present disclosure are formed on an additional substrate or film, such as a transparent film, and are attached to the light control laminate, the adherend surface may be an additional substrate or film, such as a transparent film.

### Louver Film 700

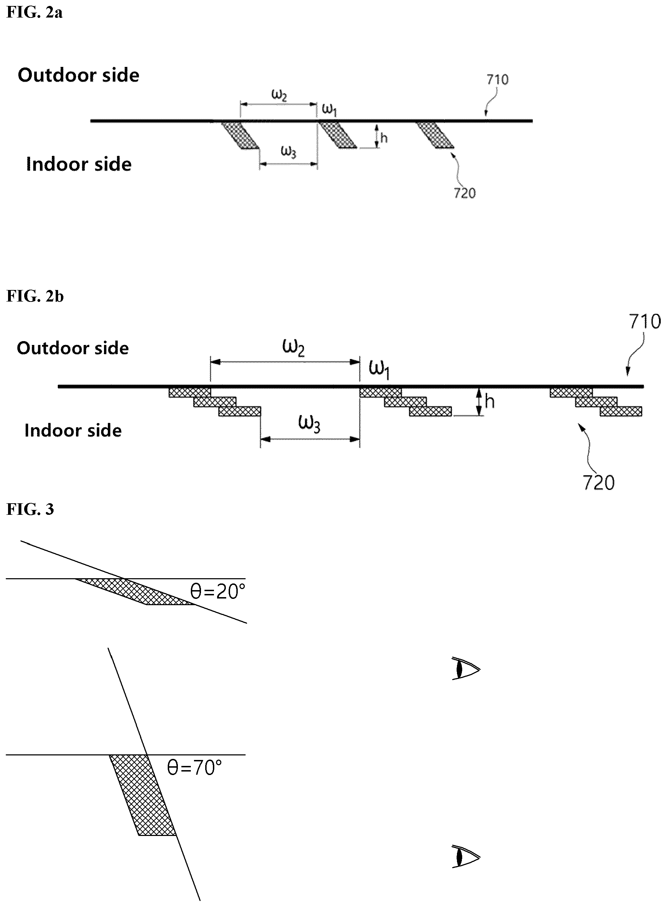

FIGS. 2a and 2b are views showing the structure of a louver film according to an embodiment of the present disclosure.

The transmittance variable optical laminate of the present disclosure includes a louver film 700 disposed on at least a portion of the indoor-side surface of the light control laminate, wherein the louver film 700 necessarily includes light-blocking patterns 720.

The louver film 700 of the present disclosure may not further include an additional substrate or film for supporting the light-blocking patterns 720. In this case, the light-blocking patterns 720 may be formed directly on one surface of the light control laminate 100. In this case, the light-blocking patterns 720 may be formed directly on an indoor-side surface of the light control laminate 100 so as to protrude toward the indoor side. The light-blocking pattern 720 of the louver film 700 of the present disclosure may also be formed directly on an indoor-side surface of the light control laminate 100. In this case, there is an advantage in that it is possible to minimize the overall thickness of the transmittance variable optical laminate of the present disclosure. Also, in this case, it is possible to use a method in which a pattern including a release layer is first formed and then transferred to an adherend surface with a pressure-sensitive adhesive/ adhesive layer interposed therebetween. In this case, as the thickness of the pressure-sensitive adhesive / adhesive layer decreases, the overall thickness of the transmittance variable optical laminate decreases.

In addition, as shown in FIG. 1b, the louver film 700 of the present disclosure may further include an additional substrate or film for supporting the light-blocking patterns 720, in addition to the light-blocking patterns 720, and may preferably further include a transparent film.

The light-blocking patterns 720 are characterized by being inclined at a predetermined angle (θ) with respect to the adherend surface when viewed in a vertical cross-section. Here, "the light-blocking patterns 720 are inclined at a predetermined angle (θ) with respect to the adherend surface when viewed in a vertical cross-section" is meant to include substantially inclined. In the present disclosure, "substantially inclined" may mean that the overall shape of two or more light-blocking patterns 720, for example, an overall shape obtained by connecting the outer points of multiple layers of a light-blocking pattern as described below, is inclined in a direction toward a user when viewed in a vertical cross-section.

Specifically, referring to FIGS. 2a and 2b, the louver film 700 of the present disclosure includes a shape in which light-blocking patterns 720 each having a predetermined height (h) are repeatedly formed at a predetermined distance (ω2) from each other. In this case, as the light-blocking patterns 720 are formed to be inclined, the louver film 700 may include a vertical light-transmitting portion (ω3) between the inclined light-blocking patterns and a light-blocking portion (ω1) defined by the light-blocking pattern.

More specifically, "the light-blocking patterns 720 of the present disclosure are inclined at a predetermined angle with respect to the adherend surface when viewed in the vertical cross-section" may mean that they form an angle that is not perpendicular to the adherend surface. More specifically, the light-blocking patterns 720 of the present disclosure may be inclined in a direction toward a user when viewed in a vertical cross-section. For example, where the transmittance variable optical laminate of the present disclosure is applied to a sunroof of a vehicle, the light-blocking patterns 720 may be inclined in a direction toward a rear seat passenger. Accordingly, there is an advantage of dramatically reducing glare caused to a rear seat passenger of the vehicle by reflected light while minimizing the loss of transmittance of external light to the rear seat passenger.

The light-blocking patterns 720 of the present disclosure may be inclined and may be single- or multi-layered.

FIG. 3 shows the angle of a light-blocking pattern of the present disclosure with respect to an adherend surface when the light-blocking pattern is single-layered. Where the light-blocking pattern is single-layered, it may have one shape among polygonal, circular, semicircular, dotted line, straight line, diagonal line, wavy, sawtooth, and grid shapes, and the shape of the cross-section thereof is not particularly limited as long as it achieves the effect of the present disclosure. Preferably, the cross-section of the light-blocking pattern may have an inclined rectangular shape as shown in FIG. 3, and in this case, a light-blocking pattern inclined at a predetermined angle (θ) may be achieved.

The angles of the light-blocking patterns 720 of the present disclosure with respect to the adherend surface when viewed in the vertical cross-section may be the same as or different from each other depending on the location. For example, where the transmittance variable optical laminate of the present disclosure is applied to a sunroof of a vehicle, the angle of the light-blocking pattern 720 with respect to the adherend surface when viewed in the vertical cross-section may become larger as the light-blocking pattern 720 gets closer to a rear seat passenger of the vehicle, and may become smaller as the light-blocking pattern 720 gets farther from the rear seat passenger, without being limited thereto. In this case, the transmittance of external light to the rear seat passenger of the vehicle may be improved more efficiently.

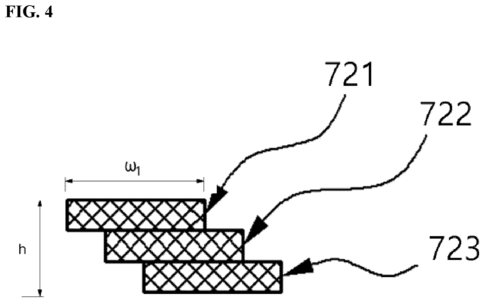

FIG. 4 shows unit patterns of a light-blocking pattern of the present disclosure when the light-blocking pattern is multi-layered. Where the light-blocking pattern of the present disclosure is multi-layered, two or more unit patterns may be laminated to be misaligned from each other to form a light-blocking pattern that is generally inclined in a predetermined direction. In the present disclosure, "laminated to be misaligned" may mean that the light-blocking pattern of the present disclosure is laminated so as to be generally inclined. The unit patterns may have a polygonal, circular, or semicircular cross-sectional shape, and may preferably have a rectangular cross-sectional shape. In this case, it is possible to form a light-blocking pattern having an inclined cross-sectional shape by photolithography, which has a great advantage in manufacturing.

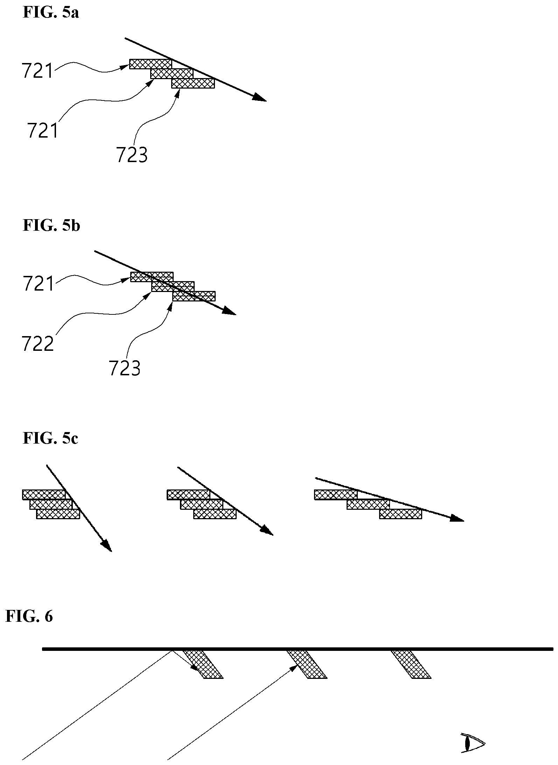

More specifically, as shown in FIG. 5, the light-blocking pattern is a three-layered structure, and includes a first unit pattern 721, a second unit pattern 722, and a third unit pattern 723. This is only for explaining one embodiment of the present disclosure, and the present disclosure is not limited thereto. Where the light-blocking pattern of the present disclosure is multi-layered, the overall shape of the light-blocking pattern, the angle of the light-blocking pattern with respect to the adherend surface, the inter-pattern spacing (ω2), and the pattern height (h) may be adjusted by adjusting the width (ω1) of each unit pattern, the height of each unit pattern, the number of unit patterns laminated, the degree of misalignment between the unit patterns, etc. Accordingly, it is possible to adjust the range of the viewing angle (θ1) for reflected image and the range of the viewing angle (θ2) for external light in the transmittance variable optical laminate of the present disclosure.

FIGS. 5a and 5b show the substantial inclination of unit patterns. As described above, "the light-blocking patterns 720 are inclined at a predetermined angle (θ) with respect to the adherend surface when viewed in a vertical cross-section" is meant to include substantially inclined. For example, where the light-blocking pattern of the present disclosure is multi-layered, a line connecting the outermost points of two or more unit patterns constituting the light-blocking pattern (FIG. 5a) or a line connecting the centers of two or more unit patterns constituting the light-blocking pattern (FIG. 5b) may be inclined at a predetermined angle (θ) with respect to the adherend surface.

FIG. 5c shows an example of adjusting the substantial inclination of the light-blocking pattern of the present disclosure by adjusting the degree of misalignment between multiple unit patterns when the light-blocking pattern of the present disclosure is multi-layered.

The light-blocking pattern 720 of the present disclosure may protrude toward the indoor side. The function of blocking the viewing angle (θ1) for reflected image by this shape in the transmission variable optical laminate of the present disclosure will now be described in detail with reference to FIG. 6, etc.

FIG. 6 shows the movement of light reflected on a transmission variable optical laminate according to an embodiment of the present disclosure.

Referring to FIG. 6, as the light-blocking patterns 720 of the present disclosure protrude toward the indoor side, the reflected light may be blocked by the sides of the light-blocking patterns 720. Accordingly, only the reflected light that is not blocked by the sides of the light-blocking patterns 720 may be viewed, so that the range of the viewing angle (θ1) of the reflected light may be adjusted.

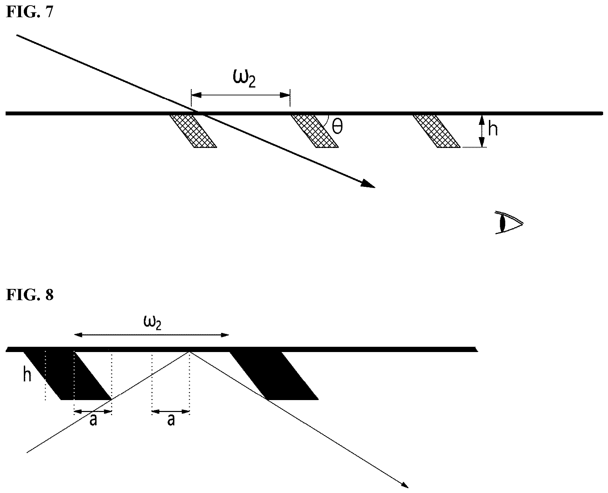

FIG. 7 shows the movement of external light through a transmission variable optical laminate according to an embodiment of the present disclosure. As shown in FIG. 7, as the light-blocking patterns 720 of the present disclosure are formed to be inclined at a predetermined angle (θ) when viewed in the vertical cross-section, the loss of external light transmittance in the inclined direction may be minimized.

FIG. 8 shows reflected light when the viewing angle for reflected image is maximum in a transmittance variable optical laminate in which a light-blocking pattern according to an embodiment of the present disclosure is single- or multi-layered and substantially inclined.

In one embodiment of the present disclosure, in which the light-blocking patterns are single- or multi-layered as described above, the patterns are formed on the adherend surface at a predetermined distance (ω2) when viewed in the vertical cross-section, and at this time, a length obtained by projecting the inclined surface of the light-blocking pattern, caused by the shape of the substantially inclined pattern, onto the adherend surface, is referred to as the inclined surface projection length (a). Also, referring to FIG. 8, the inclined surface projection length (a) may be regarded as a value obtained by subtracting the vertical light transmitting portion (ω3) from the inter-pattern spacing (ω2). The inclined surface projection length (a) may be 5 to 50% of the light-blocking portion (ω1), and when the pattern sizes are the same, the smaller the angle (θ) at which the light-blocking pattern is substantially inclined with respect to the adherend surface, the longer the inclined surface projection length (a).

In the transmittance variable optical laminate according to one embodiment of the present disclosure, the maximum viewing angle (θ1) for reflected image and the maximum viewing angle (θ2) for external light may be adjusted depending on the light-blocking portion (ω1), the inter-pattern spacing (ω2) between adjacent light-blocking patterns, the height (h) of the light-blocking pattern, and/or the inclined surface projection length (a).

For example, in the transmittance variable optical laminate of the present disclosure, when the light-blocking portions (ω1) are the same, the viewing angle range (θ1) for reflected image and the viewing angle range (θ2) for external light may be adjusted depending on the inter-pattern spacing (ω2), the height (h) of the light-blocking pattern, and/or the inclined surface projection length (a). For example, referring to the experimental example of the present disclosure, when the light-blocking portions (ω1) are the same, the smaller the width of the spacing between patterns (ω2) and the larger the height (h) of the light-blocking pattern, the smaller the maximum viewing angle (θ1) for reflected image. In addition, when the light-blocking portions (ω1) are the same, the smaller the inter-pattern spacing (ω2) and the larger the height (h) of the light-blocking pattern, the smaller the maximum viewing angle (θ2) for external light.

In addition, in the transmittance variable optical laminate of the present disclosure, when the inter-pattern spacings (ω2) are the same, the viewing angle range (θ1) for reflected image and the viewing angle range (θ2) for external light may be adjusted depending on the light-blocking portion (ω1) and the height (h) of the light-blocking pattern.

In addition, for the height (h) of the light-blocking pattern and the light-blocking portion (ω1), h/ω1 may satisfy 0.5 to 4.0, and for the inter-pattern spacing (ω2) and the vertical light-transmitting portion (ω3), the aperture ratio (p) defined as ω3/(ω2+ω1)×100(%) with respect to the direction perpendicular to the plane may be 70% or more. In this case, the pattern shape may be determined by specifying the range of each value by the relationship satisfying all of h, ω1, and p.

When the louver film 700 of the present disclosure has an aperture ratio (p) of 70% or more in the plane direction, there is an advantage in that it is possible to ensure the anti-reflection performance of the surface of the light control laminate while maintaining high transmittance in the transmission mode of the light control laminate. In general, if the aperture ratio (p) of the louver film 700 is low, the transmittance is poor. However, in the case of the present disclosure, the light-blocking patterns are inclined at a predetermined angle with respect to the adherend surface when viewed in a vertical cross-section, and thus if a user is positioned in an inclined direction in the indoor side, a relatively high transmittance may be achieved even if the aperture ratio is low.

In the present disclosure, when the maximum viewing angle (θ1) for reflected image and the maximum viewing angle (θ2) for external light, determined according to the light-blocking portion (ω1), the inter-pattern spacing (ω2) between adjacent light-blocking patterns, the height (h) of the light-blocking pattern, and/or the inclined surface projection length (a) as described above, are taken into consideration together with the distance from the transmittance variable optical laminate of the present disclosure to a user positioned in the indoor side and/or the level of eyesight of the user, the anti-reflection function for any shape in the indoor side and the external light transmission function may be maximized more precisely.

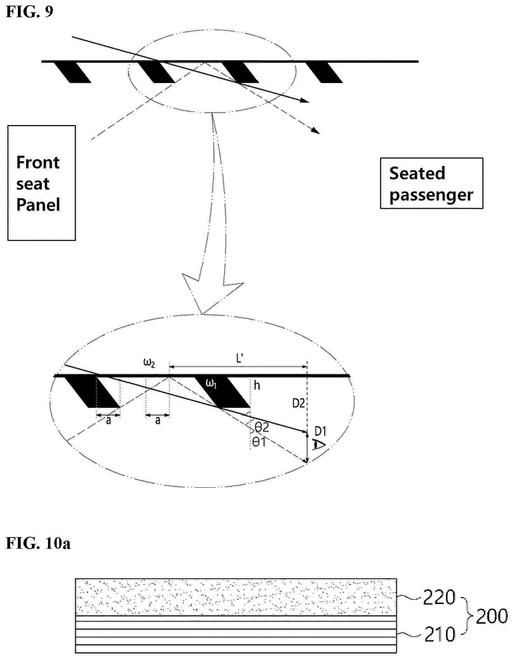

In one example of the present disclosure, where the light control laminate of the present disclosure is applied to a sunroof of a vehicle, the level of eyesight of the user may be a straight line distance (D1 in FIG. 9) from the ceiling of the vehicle to the field of vision of a vehicle passenger, preferably a rear seat passenger. The distance from the transmittance variable optical laminate to the user positioned in the interior side may be the shortest distance (L' in FIG. 9) from the center between adjacent light-blocking patterns to the position of the user.

In one example of the present disclosure, when the maximum viewing angle (θ1) for reflected image and the maximum viewing angle (θ2) for external light are set so that the line of sight position of a user positioned in the indoor side from the transmittance variable optical laminate of the present disclosure is out of the maximum viewing angle (θ1) for reflected image and is within the range of the maximum viewing angle (θ2) for external light, the anti-reflection function for any shape in the indoor side and the external light transmission function may be maximized. Accordingly, the maximum viewing angle (θ1) for reflected image and the maximum viewing angle (θ2) for external light in the present disclosure may be set such that the line of sight position of a user positioned in the indoor side from the transmittance variable optical laminate of the present disclosure is out of the maximum viewing angle (θ1) for reflected image and is within the range of the maximum viewing angle (θ2) for external light. Also, in the louver film of the present disclosure, the light-blocking portion (ω1), the inter-pattern spacing (ω2), the height (h) of the light-blocking pattern, and/or the inclined surface projection length (a) may be set to achieve this viewing angle range.

More specifically, referring to FIG. 9 showing an example of the present disclosure, for a transmittance variable optical laminate having any light-blocking patterns formed thereon, the point at which light that starts from the front seat panel of a vehicle and reaches the field of vision of the seated passenger while forming a maximum viewing angle (θ1) for reflected image is reflected on the louver film is not the center of the inter-pattern spacing (ω2), but may be a point shifted by the inclined surface projection length (a) of the light-blocking pattern.

As an example of the present disclosure, the range of the maximum viewing angle (θ1) for reflected image may be from 40° to 75°, wherein the viewing angle (θ1) for reflected image is the angle of the reflected light with respect to a straight line perpendicular to the adherend surface toward the indoor side when viewed in the vertical cross-section of the transmittance variable optical laminate.

As an example of the present disclosure, the range of the maximum viewing angle (θ2) for external light transmitted from the outside may be from 60° to 85°, wherein the viewing angle (θ2) for external light is the angle of the external light with respect to a straight line perpendicular to the adherend surface toward the indoor side when viewed in the vertical cross-section of the transmittance variable optical laminate.

In one example of the present disclosure, where the light control laminate of the present disclosure is applied to a sunroof of a vehicle, the field of vision of a rear seat passenger is important in order for the reflection (reflected image) of the front seat panel, etc. in the indoor side not to cause glare to the rear seat passenger without reducing the transmittance of external light. Therefore, the range in which the field of vision of the rear seat passenger is located should be adjusted to include the viewing angle range (θ2) for external light, but not include the viewing angle range (θ1) for reflected image.

The appropriate range of curvature of the transmittance variable optical laminate applied to the vehicle may vary depending on the height of the vehicle body, the sitting height of the passenger, etc., but may be affected by the ceiling height. The ceiling height refers to the vertical distance from the eye level of the rear seat passenger to the indoor-side uppermost surface of the ceiling, which may specifically satisfy 300 mm to 600 mm, preferably 300 mm to 500 mm.

FIG. 9 is a view showing an example of the above-mentioned transmittance variable optical laminate. Hereinafter, with reference to FIG. 9, a more detailed description will be made of the height (h) of the light-blocking pattern, the light-blocking portion (ω1), the inter-pattern spacing (ω2), and the inclined surface projection length (a), at which the reflection (reflected image) of the front seat panel does not cause glare to a rear seat passenger without reducing the transmittance of external light.

FIG. 9 is a view showing reflected light (dotted line arrow), which starts from the front seat panel and reaches the field of vision of the seated passenger, and external light (solid line arrow) that is transmitted from the outside and reaches the field of vision of the seated passenger. For example, in FIG. 9, assuming that ω2 is an inter-pattern spacing where no light-blocking pattern is formed on the louver film, L' is the straight-line distance from the point, where light starting from the front seat panel reaches the transmittance variable optical laminate, to the ceiling of the rear seat passenger, D2 is the distance from the point, where external light reaches the field of vision of the rear seat passenger, to the ceiling of the rear seat passenger, D1 is the distance from the point, where reflected light reaches the field of vision of the rear seat passenger, to the ceiling of the rear seat passenger, ΔD means the value of D1 minus D2. The ΔD value corresponds to the field of vision of the rear seat passenger in which the reflection (reflected image) of the front seat panel does not cause glare to the rear seat passenger without reducing the transmittance of external light. The field of vision of the rear seat passenger may be within the range of ΔD.

The ΔD value corresponds to the field of vision of the rear seat passenger in which the reflection (reflected image) of the front seat panel does not cause glare to the rear seat passenger without reducing the transmittance of external light. Specifically, when the position of the eye is within the ΔD range, only external light is viewed while the reflected light is not viewed, and when the position of the eye is outside the ΔD range, both external light and the reflected light are viewed. For example, where the transmittance variable optical laminate of the present disclosure is applied to a sunroof of a vehicle, it is preferable that the ΔD value range overlaps with the range of 300 mm to 500 mm, which is the vertical distance from the eye level of the rear seat passenger to the uppermost surface of the ceiling (transmittance variable optical laminate) in the indoor side.

The ΔD value may be determined by the light-blocking portion (ω1), the inter-pattern spacing (ω2), the height (h) of the light-blocking pattern, and the inclined surface projection length (a). Specifically, the viewing angle θ1 for reflected image is tan^(-1)(ω2/2h), the viewing angle θ2 for external light is tan^(-1)((ω2+a)/h), the distance (D1) from the point, where the reflected light reaches the field of vision of the rear seat passenger, to the ceiling of the rear seat passenger, is L'/tan(θ1), and the distance (D2) from the point, where external light reaches the field of vision of the rear seat passenger, to the ceiling of the rear seat passenger, is (L'+ω2/2+a)/tan(θ2). Accordingly, the viewing angles θ1 and θ2 are controlled by the light-blocking portion (ω1) and the height (h) of the light-blocking pattern, and the D1 and D2 values are controlled according to the θ1 and θ2 values, the inter-pattern spacing (ω2), and the inclined surface projection length(a), thereby determining the ΔD range value.

In addition, the larger the value of θ2 and the smaller the value of θ1, the larger the range of ΔD. Preferably, D2 may be 500 mm or less, and D2+ΔD may be 300 mm or more.

In this case, if the inclined surface projection length (a) increases, a loss of aperture ratio may occur, but the end point of ΔD becomes farther away from the transmittance variable optical layer as the θ1 value decreases, and thus the range of ΔD may be widened.

For example, referring to FIG. 9, it can be seen that, in consideration of a seated passenger who is at a point (L') 1,000 mm away from the center between adjacent light-blocking patterns, when D2, which determines the start point of the ΔD value range, satisfies 500 mm or less, the range in which external light is transmitted widens, and when D1 (D2 + ΔD), which determines the end point of the ΔD value range, satisfies 300 mm or more, the range in which reflected light is blocked from reaching the field of vision of the seated passenger also widens.

In one example of the present disclosure, the louver film 700 includes the light-blocking patterns 720, wherein the light-blocking patterns 720 may be formed directly on the light control laminate, or may be formed on a separate transparent film and attached to the light control laminate. Where the light-blocking patterns 720 are formed on a transparent film, a pressure-sensitive adhesive/ adhesive layer (not shown for convenience) may be further included between the transparent film and the light control laminate.

The transparent film may be a conventional or later-developed film, and the material of the transparent film layer that is used in the manufacture of the louver film 700 used in the present disclosure may be any known synthetic resin or natural resin that exhibits a predetermined light transmittance when manufactured in a film form, and is preferably synthetic resin in terms of economy and processability. Preferred examples of a resin that may be used as the material of the transparent film layer include polyvinyl chloride (PVC), polyethylene terephthalate (PET), polyacrylate, polymethyl methacrylate, polyurethane, polycarbonate, polyethylene, polypropylene, cellulose acetate butyrate (CAB), or copolymers thereof.

The pressure-sensitive adhesive/ adhesive layer (not shown for convenience) may be formed using a pressure-sensitive adhesive, and preferably has excellent heat-resistant adhesive properties. The term "heat-resistant adhesive properties" means that the adhesive strength change rate after being placed in an oven at 80°C for 240 hours is 30% or less compared to the adhesive strength before being placed in the oven, or that no bubbles are generated.

The pressure-sensitive adhesive may be a conventional or later-developed pressure-sensitive adhesive. In one or more embodiments, the adhesive may be an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, or the like. The pressure-sensitive adhesive is not particularly limited as long as it has adhesive and viscoelastic properties. However, from the viewpoint of ease of acquisition, etc., the adhesive may be an acrylic pressure-sensitive adhesive, and may include, for example, a (meth)acrylate copolymer, a crosslinking agent, a solvent, etc. In addition, the adhesive may be selected in consideration of ensuring adhesive and viscoelastic properties with the light-blocking patterns 720. For example, the pressure-sensitive adhesive/ adhesive layer may include an acrylate-based pressure-sensitive adhesive (PSA) material or an optically clear adhesive (OCR) material

The light-blocking patterns 720 may be fabricated using, without limitation, any material used for light-blocking purposes, and may include, for example, a light-blocking agent, a light-diffusing agent, and/or a coloring agent. In one embodiment of the present disclosure, the light-blocking patterns of the present disclosure may be fabricated using a composition including a black coloring agent, and may include, as a main component, a composition including a black pigment dispersion and/or a black dye, and may further include, if necessary, a resin, a polymerization initiator, and additional additives.

The method of forming the light-blocking patterns 720 is not particularly limited, and for example, a method of forming grooves in the adherend surface 710 and filling a material for forming the light-blocking patterns 720 may be used, or a method of preparing a photosensitive resin composition for forming the light-blocking patterns 720 and forming the light-blocking patterns 720 on the adherend surface by a photolithography method may be applied.

The adherend surface 710 may be an indoor-side surface of the light control laminate of the present disclosure, or may be a transparent film added separately in addition to the light control laminate, without being limited thereto.

### Light Control Laminate 100

The light control laminate of the present disclosure includes an electric field-driven liquid crystal between polarizing plates, and is particularly characterized by having a structure in which a transparent conductive layer is in direct contact with the polarizing plates. Accordingly, the thickness of the light control laminate and the transmittance variable optical laminate including the same may be reduced, so that not only there is an advantage in terms of the manufacturing process and application, but also in particular, it is possible to maximize the property of controlling the viewing angle for reflected image and the property of controlling transmittance, which are the main purposes of the present disclosure.

Specifically, the light control laminate of the present disclosure includes: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one transparent conductive layer among the first transparent conductive layer and the second transparent conductive layer is formed in direct contact with any one polarizing plate among the first polarizing plate and the second polarizing plate.

FIGS. 10a to 10e show the laminated structures of polarizing plates according to one or more embodiments of the present disclosure.

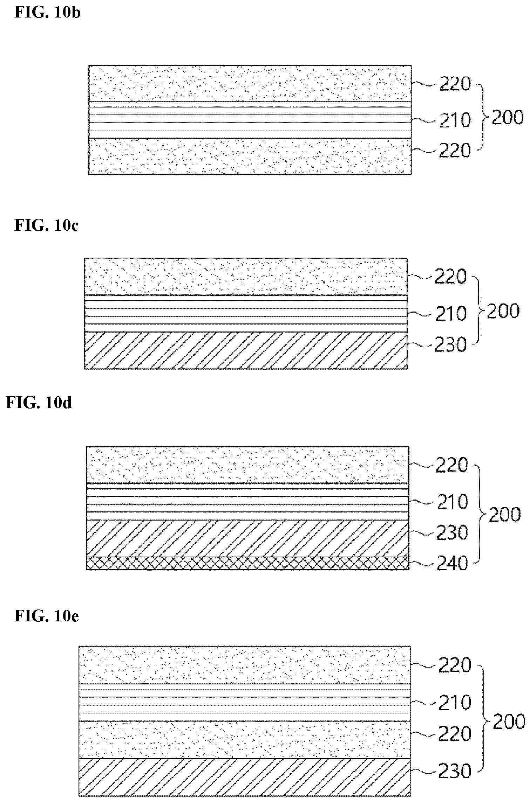

Referring to FIGS. 10a to 10e, the polarizing plate 200 includes a polarizer 210, and may further include functional layers, such as a protective layer 220, a retardation matching layer 230, and a refractive index matching layer 240, on one or both surfaces of the polarizer 210. For example, the polarizing plate 200 may include a polarizer 210 and a protective layer 220 laminated on one or both surfaces of the polarizer 210 (see FIGS. 10a and 10b), or may include a polarizer 210, a protective layer 220 laminated on one surface of the polarizer 210, and a retardation matching layer 230 laminated on the other surface opposite to the one surface of the polarizer 210 (see FIG. 10c), or may include a polarizer 210, a protective layer 220 laminated on one surface of the polarizer, and a retardation matching layer 230 and a refractive index matching layer 240 sequentially laminated on the other surface opposite to the one surface of the polarizer 210 (see FIG. 10d), or may include a polarizer 210, a protective layer 220 laminated on one surface of the polarizer, and a protective layer 220 and a retardation matching layer 230 sequentially laminated on the other surface opposite to the one surface of the polarizer 210 (see FIG. 10e).

The polarizer 210 may be a conventional or later-developed polarizer, and may be, for example, a stretched polarizer or a coated polarizer.

In one embodiment, the stretched polarizer may include a stretched polyvinyl alcohol (PVA)-based resin.

The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In one embodiment, the coated polarizer may be formed by a liquid crystal coating composition, wherein the liquid crystal coating composition may include a reactive liquid crystal compound, a dichroic dye, and the like.

The term "reactive liquid crystal compound" may refer to a compound including, for example, a mesogen skeleton and also including one or more polymerizable functional groups. Such reactive liquid crystal compounds are variously known under the name reactive mesogen (RM). The reactive liquid crystal compound may be polymerized by light or heat to form a cured film in which a polymer network is formed while maintaining the liquid crystal arrangement.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarization properties, and has different absorbances in the major and minor axis directions of the molecule. The dichroic dyes may be a conventional or later-developed dichroic dye, and may include at least one selected from the group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The protective layer 220 serves to protect the polarization characteristics of the polarizer 210 from post-processing and external environments, and may be provided in the form of a protective film, etc.

The protective layer 220 may be formed on and in direct contact with one or both surfaces of the polarizer 210, as shown in FIGS. 10a and 10b, without being limited thereto. For example, the protective layer may have a multi-layer structure in which one or more protective layers are continuously laminated, and may be formed in direct contact with other functional layer(s).

In one or more embodiments, the protective layer 220 may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and cyclic olefin polymer (COP).

The retardation matching layer 230 may be formed on and in direct contact with one surface of the polarizer 210, as shown in FIGS. 10c and 10d, without being limited thereto. For example, as shown in FIG. 10e, the retardation matching layer 230 may be formed on one surface of the protective layer 220, so that the polarizer 210, the protective layer 220, and the retardation matching layer 230 may be sequentially laminated.

The retardation matching layer (230) may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform, or 2 methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer 230 may be 10 µm to 100 µm in the case of the stretched polymer film, and 0.1 µm to 5 µm in the case of the liquid crystal polymer film.

The refractive index matching layer 240 is provided to compensate for the refractive index difference of the optical laminate caused by the transparent conductive layer 300, and may serve to improve the viewing characteristics, etc. by reducing the refractive index difference. Furthermore, the refractive index matching layer 240 may be provided to correct the color caused by the transparent conductive layer 300. Meanwhile, when the transparent conductive layer has a pattern, the refractive index matching layer 240 may compensate for the difference in transmittance between a pattern region with the pattern formed and a non-pattern region where not pattern is formed.

Specifically, the transparent conductive layer 300 is laminated adjacent to other members having a refractive index different therefrom (for example, the polarizer, etc.), and the difference in the refractive index between the transparent conductive layer and other layer adjacent thereto may lead to the difference in light transmittance. In particular, when a pattern is formed on the transparent conductive layer, a problem may arise in that the pattern region and the non-pattern region are viewed to be distinguishable from each other. Therefore, the refractive index matching layer 240 is included to compensate for refractive index, thereby reducing the difference in light transmittance of the optical laminate. In particular, when a pattern is formed on the transparent conductive layer, the pattern region and the non-pattern region should not be viewed to be distinguishable from each other.

In one embodiment, the refractive index of the refractive index matching layer 240 may be appropriately selected depending on the material of another adjacent member, but is preferably 1.4 to 2.6, more preferably 1.4 to 2.4. In this case, it is possible to prevent light loss caused by a sharp difference in refractive index between the transparent conductive layer 300 and other members such as the polarizer 210.

The refractive index matching layer 240 is not particularly limited as long as it can prevent the sharp difference in refractive index between the transparent conductive layer 300 and other members such as the polarizer 210, and it may include a compound used in the formation of a conventional or later-developed refractive index matching layers. For example, the refractive index matching layer may be formed from a refractive index matching layer formation composition including a polymerizable isocyanate compound.

In one embodiment, the polarizing plate 200 may further include other functional layers to assist or enhance the characteristics of the polarizer, in addition to the above-mentioned functional layers and, for example, may further include an overcoat layer or a hard coating layer in order to further improve the mechanical durability.

In one or more embodiments, the polarizing plate 200 may have a thickness of 30 µm to 200 µm, preferably 30 µm to 170 µm, more preferably 50 µm to 150 µm. In this case, the polarizing plate 200 may maintain its optical characteristics while an optical laminate having a small thickness may be manufactured.

The transparent conductive layer 300 is provided for driving the liquid crystal layer 400 and may be formed in direct contact with the polarizing plate 200. For example, as shown in FIG. 1, the first transparent conductive layer 300-1 and the second transparent conductive layer 300-2 may be formed in direct contact with the first polarizing plate 200-1 and the second polarizing plate 200-2, respectively.

Conventionally, a light control laminate used to manufacture a smart window, etc. is manufactured by forming a conductive layer for driving a liquid crystal on one surface of a substrate and bonding the other surface of the substrate to a polarizing plate. However, the light control laminate 100 according to the present disclosure has the conductive layer directly formed on one surface of the polarizing plate without including a separate substrate for forming the conductive layer, and thus is characterized by having improved transmittance in light transmission mode and improved flexural properties while having a reduced overall thickness. Furthermore, in the light control laminate 100 according to the present disclosure, a conductive layer is formed directly on one surface of a polarizing plate, and thus even when the louver film 700 for anti-reflection function for reflected image is further included on the indoor-side surface of the light control laminate, the thickness of the transmittance variable optical laminate of the present disclosure may be reduced, thereby imparting the anti-reflection function without reducing the transmittance adjustment function.

In one embodiment, the transparent conductive layer 300 may be directly deposited and formed on one surface of the polarizing plate 200. In this case, the transparent conductive layer 300 may be formed in direct contact with a pretreated surface of the polarizing plate 200 after performing pre-treatment such as corona treatment or plasma treatment on one surface of the polarizing plate 100 in order to improve the adhesion between the transparent conductive layer 300 and the polarizing plate 200. The pre-treatment is not limited to corona treatment or plasma treatment, and may be any conventional or later-developed pre-treatment process that does not impair the purpose of the present disclosure.

In another embodiment of the present disclosure, the transparent conductive layer 300 may be formed in direct contact with the polarizing plate 200 with a highly adhesive layer as a primer layer (not shown) interposed therebetween in order to improve the adhesion between the transparent conductive layer 300 and the polarizing plate 200.

The transparent conductive layer 300 preferably has a visible light transmittance of 50% or more, and for example, may include at least one selected from the group consisting of a transparent conductive oxide, a metal, a carbonaceous material, a conductive polymer, a conductive ink, and nanowires, without being limited thereto, and a conventional or later-developed transparent conductive layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like. Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy. The carbonaceous material may include at least one selected from the group consisting of carbon nanotubes (CNTs), and graphene, and the conductive polymer may include at least one selected from the group consisting of polypyrrole, polythiophene, polyacetylene, PEDOT, and polyaniline. The conductive ink may be a mixture of metal powder and a curable polymeric binder, and the nanowires may be, for example, silver nanowires (AgNWs).

Furthermore, the transparent conductive layer 300 may be formed to have a structure consisting of two or more layers by combining the above-described materials. For example, in order to reduce the reflectivity of incident light and increase the transmittance, the transparent conductive layer may be formed to have a two-layer structure including a metal layer and a transparent conductive oxide layer.

The liquid crystal layer 400 may change the driving mode of the optical laminate by adjusting the transmittance of light incident in one or more directions in response to an electric field.

The liquid crystal layer 400 may include a liquid crystal compound and a spacer, and may mean, for example, a region defined by a first alignment film 500-1, a second alignment film 500-2, and a sealant 600 as shown in FIG. 1.

The liquid crystal compound is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The liquid crystal driving method for the liquid crystal layer 400 is not particularly limited, and for example, the liquid crystal may be driven in a twisted nematic (TN) mode as shown in FIG. 1b, but may also be driven in a super twisted nematic (STN) mode, a vertical alignment (VA) mode, an electrically controlled birefringence (ECB) mode, etc.

The spacer may include at least one of a ball spacer and a column spacer, and is particularly preferably a ball spacer. The spacer may be composed of one or more spacers, and preferably has a height of 1 µm to 10 µm. In addition, when viewed in a planar direction, the area occupied by the spacer in the liquid crystal layer 400 is preferably 0.01 to 10% of the area of the liquid crystal layer 400 in terms of improving the user's visibility and the transmittance in light transmission mode.

In one embodiment, the liquid crystal layer 400 may further include an alignment film 500 as needed. For example, the alignment film 500 may be formed on both surfaces of the liquid crystal layer 400 including a liquid crystal compound.

The alignment film 500 is not particularly limited as long as it serves to align the liquid crystal compound, but may preferably include a photo-alignable or photo-curable polymer, etc. For example, the alignment film 500 may be fabricated by applying and curing an alignment film coating composition including a photo-alignable or photo-curable polymer, a photopolymerization initiator, and a solvent.

The photo-alignable or photo-curable polymer is not particularly limited, but may be a cinnamate-based polymer, a polyimide-based polymer, or the like. For example, it may be poly(vinyl cinnamate) (PVCi), poly(siloxane cinnamate) (PSCN), poly(ω(4-chalconyloxy)alkoxyphenylmaleimide), 6-FDA-HAB-Cl, or the like. In addition, a conventional or later-developed polymer capable of exhibiting alignment properties may be used.

The sealant 600 is positioned between the first polarizing plate 200-1 and the second polarizing plate 200-2 in the inactive region, and serves to bond the first polarizing plate and the second polarizing plate to each other. The sealant 600 may be provided to secure a space for the liquid crystal layer 400 to be provided between the first polarizing plate 200-1 and the second polarizing plate 200-2 together with the spacer.

The sealant 600 may include a curable resin as a base resin. As the base resin, a UV-curable resin or thermosetting resin known in the art to be usable for a sealant may be used. The UV-curable resin may be a polymer of a UV-curable monomer. The thermosetting resin may be a polymer of a thermosetting monomer.

As the base resin of the sealant 600, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant may further include an initiator, for example, a photoinitiator or a thermal initiator.

The sealant 600 may be formed by a method commonly used in the art, and for example, may be formed by drawing a sealant into the outer peripheral region (i.e., inactive region) of the liquid crystal layer using a dispenser having a nozzle.

### < Smart Window and Sunroof>

The present disclosure includes, in addition to the above-described transmittance variable optical laminate, a smart window including the same. In addition, the present disclosure includes a vehicle in which the smart window is applied to at least one of a front window, a rear window, a side window, a sunroof, and an interior partition, and a window for a building including the smart window.

For example, a vehicle including the smart window of the present disclosure may have vehicle glass bonded onto both surfaces of the transmittance variable optical laminate, wherein the vehicle glass includes the louver film described above. For example, the smart window including the vehicle glass may be manufactured by placing an adhesive film and vehicle glass on both surfaces of the optical laminate, followed by heating with a press machine at a temperature of 90°C and a vacuum of about 1 bar for 10 to 20 minutes, wherein the adhesive film may include an EVA film, a PVB film, or the like.

## Claims

1. A transmittance variable optical laminate comprising:
a light control laminate comprising an electric field-driven liquid crystal between polarizing plates; and
a louver film disposed on at least a portion of an indoor-side surface of the light control laminate,
wherein the louver film comprises light-blocking patterns, wherein the light-blocking patterns are inclined at a predetermined angle with respect to an adherend surface when viewed in a vertical cross-section.

2. The transmittance variable optical laminate of claim 1, wherein a length (a) obtained by projecting an inclined surface of the light-blocking pattern onto the adherend surface when viewed in the vertical cross-section is 5 to 50% of a light-blocking portion (ω1).

3. The transmittance variable optical laminate of claim 1 or 2, wherein the transmittance variable optical laminate has a maximum viewing angle ranging from 40° to 75° for reflected image, wherein the viewing angle (θ1) for the reflected image is an angle of the reflected light with respect to a straight line perpendicular to the adherend surface toward the indoor side when viewed in the vertical cross-section of the transmittance variable optical laminate.

4. The transmittance variable optical laminate of one of claims 1 to 3, wherein the transmittance variable optical laminate has a maximum viewing angle (θ2) ranging from 60° to 85° for external light transmitted from an outside, wherein the viewing angle (θ2) for the external light is an angle of the external light with respect to a straight line perpendicular to the adherend surface toward the indoor side when viewed in the vertical cross-section of the transmittance variable optical laminate.

5. The transmittance variable optical laminate of one of claims 1 to 4, wherein the light-blocking pattern is composed of two or more unit patterns laminated to be at least partially misaligned.

6. The transmittance variable optical laminate of one of claims 1 to 5, wherein the louver film comprises: an inter-pattern spacing where the light-blocking pattern is not formed; and a light-blocking portion where the light-blocking pattern is formed,
wherein, assuming that a height of the light-blocking pattern is h, and the light-blocking portion is ω1, h/ω1 is 0.5 to 4.0, and assuming that an inter-pattern spacing is ω2 and a vertical light-transmitting portion is ω3, an aperture ratio (p) defined as ω3/(ω2+ω1)×100(%) with respect to a direction perpendicular to a plane is 70% or more.

7. The transmittance variable optical laminate of one of claims 1 to 6, wherein the light-blocking patterns protrude toward the indoor side.

8. The transmittance variable optical laminate of one of claims 1 to 7, wherein the light control laminate comprises:
a first polarizing plate;
a first transparent conductive layer formed on one surface of the first polarizing plate;
a second polarizing plate opposite to the first polarizing plate;
a second transparent conductive layer formed on one surface of the second polarizing plate and opposite to the first transparent conductive layer; and
a liquid crystal layer provided between the first transparent conductive layer and the second transparent conductive layer,
wherein at least one of the first transparent conductive layer and the second transparent conductive layer may be formed in direct contact with any one of the first polarizing plate and the second polarizing plate.

9. The transmittance variable optical laminate of claim 8, wherein at least one of the first transparent conductive layer and the second transparent conductive layer comprises at least one selected from the group consisting of a transparent conductive oxide, a metal, a carbonaceous material, a conductive polymer, a conductive ink, and nanowires.

10. The transmittance variable optical laminate of claim 8 or 9, wherein at least one of the first polarizing plate and the second polarizing plate comprises at least one functional layer selected from the group consisting of a protective layer, a retardation matching layer, and a refractive index matching layer.

11. The transmittance variable optical laminate of one of claims 8 to 10, wherein at least one of the first polarizing plate and the second polarizing plate has a thickness of 30 µm to 200 µm.

12. The transmittance variable optical laminate of one of claims 8 to 11, wherein the liquid crystal layer comprises at least one spacer selected from the group consisting of a ball spacer and a column spacer.

13. The transmittance variable optical laminate of one of claims 8 to 12, wherein the light control laminate further comprises an alignment film on both surfaces of the liquid crystal layer.

14. A sunroof comprising the transmittance variable optical laminate of any one of claims 1 to 13.
